# EUROPEAN PATENT APPLICATION

(11) **EP 4 376 375 A1**
(43) Date of publication of application: **29.05.2024**
(21) Application number: 23212414.9
(22) Date of filing: 27.11.2023
(51) Int. Cl.: H04L 43/028, H04L 43/12, H04L 69/22

(54) **PACKET MIRRORING METHOD, APPARATUS, AND SYSTEM**

(30) Priority: 28.11.2022 CN 202211501238; 13.02.2023 CN 202310158555
(71) Applicant: Huawei Technologies Co., Ltd., Shenzhen, Guangdong 518129 (CN)
(72) Inventor: CUI, Guojie, Shenzhen, 518129 (CN); ZHANG, Yongping, Shenzhen, 518129 (CN)
(74) Representative: Gill Jennings & Every LLP

(57) **Abstract**

A packet mirroring method, apparatus, and system are provided, and belong to the field of network technologies. The method includes: A first network device receives an internet protocol version 6 (internet protocol version 6, IPv6) packet. The IPv6 packet includes a service packet and a packet header, the packet header includes a first mirroring index, and the first mirroring index corresponds to feature information in the service packet. The first network device determines packet observing port information based on the first mirroring index and a first mapping relationship. The packet observing port information indicates a packet observing port, and the first network device includes the packet observing port. The first network device mirrors the IPv6 packet to the packet observing port. In this application, forwarding efficiency of the IPv6 packet can be ensured when the IPv6 packet is mirrored.

## Description

This application claims priority to Chinese Patent Application No. 202211501238.3, filed on November 28, 2022 and entitled "PACKET MIRRORING METHOD, APPARATUS, AND SYSTEM", which is incorporated herein by reference in its entirety.

### TECHNICAL FIELD

This application relates to the field of network technologies, and in particular, to a packet mirroring method, apparatus, and system.

### BACKGROUND

Generally, a network device has a packet mirroring (mirror) function. Packet mirroring means that the network device replicates a packet to a specified port of the network device to analyze and monitor network traffic through a monitoring platform connected to the specified port.

In a live network, the network device usually performs packet mirroring based on a 5-tuple of a service packet. However, with the development of network technologies, internet protocol version 6 (internet protocol version 6, IPv6) is increasingly widely used as a bearer protocol of a public network. A packet that an IPv6 network bears is an IPv6 packet. The IPv6 packet includes the service packet and a packet header encapsulated outside the service packet, and the 5-tuple is included in the service packet. In the IPv6 network, if packet mirroring needs to be performed based on the 5-tuple, the network device needs to parse the packet header of the IPv6 packet and the service packet included in the IPv6 packet layer by layer. That is, the network device needs to perform deep parsing on the IPv6 packet, but the deep parsing is prone to affect forwarding efficiency of the IPv6 packet.

### SUMMARY

This application provides a packet mirroring method, apparatus, and system, to ensure forwarding efficiency of an IPv6 packet while mirroring the IPv6 packet. Technical solutions of this application are as follows.

According to a first aspect, a packet mirroring method is provided. The method includes: A first network device receives an IPv6 packet. The IPv6 packet includes a service packet and a packet header, the packet header includes a first mirroring index, and the first mirroring index corresponds to feature information in the service packet. The first network device determines packet observing port information based on the first mirroring index and a first mapping relationship. The packet observing port information indicates a packet observing port, and the first network device includes the packet observing port. The first network device mirrors the IPv6 packet to the packet observing port. The first mapping relationship indicates that the first mirroring index corresponds to the packet observing port information.

According to the technical solution provided in this application, an IPv6 packet includes a service packet and a packet header, a first mirroring index in the packet header corresponds to feature information in the service packet, and a first network device determines packet observing port information based on a first mapping relationship and the first mirroring index in the packet header and mirrors the IPv6 packet to a packet observing port indicated by the packet observing port information, so that the first network device can mirror the IPv6 packet based on the feature information in the service packet included in the IPv6 packet without performing deep parsing on the IPv6 packet, thereby ensuring forwarding efficiency of the IPv6 packet.

Optionally, the packet header includes an IPv6 basic header (basic header) and an IPv6 extension header (extension header), and the IPv6 extension header includes the first mirroring index.

Optionally, the IPv6 extension header includes a segment routing header (segment routing header, SRH). For example, the SRH includes a type-length-value (type-length-value, TLV) field, and the first mirroring index is located in the TLV field.

Optionally, the IPv6 extension header includes a bit index explicit replication (bit index explicit replication, BIER) header.

Optionally, the BIER header is a bit index explicit replication internet protocol version 6 (bit index explicit replication internet protocol version 6, BIERv6) header or a bit index explicit replication in internet protocol version 6 (bit index explicit replication in internet protocol version 6, BIERin6) header.

Optionally, the BIER header includes a reserved field and an extension field, and the first mirroring index is located in the reserved field or the extension field.

Optionally, the method further includes: The first network device receives the first mapping relationship sent by a network management device.

According to the technical solution provided in this application, a first network device receives a first mapping relationship sent by a network management device, so that when receiving an IPv6 packet, the first network device determines packet observing port information based on the first mapping relationship and a first mirroring index in a packet header of the IPv6 packet and mirrors the IPv6 packet to a packet observing port indicated by the packet observing port information.

Optionally, the feature information includes at least one of the following: an n-tuple, a source media access control (media access control, MAC) address, and priority information, where n is a positive integer. For example, the priority information is class of service (class of service, COS) priority information, type of service (type of service, TOS) priority information, or differentiated services code point (differentiated services code point, DSCP) information. A COS priority is also referred to as an 802.1p priority. "802.1p" is short for Institute of Electrical and Electronics Engineers (Institute of Electrical and Electronics Engineers, IEEE) 802.1p.

Optionally, the first network device is a transit device or an egress device on a first IPv6 forwarding path, and the first IPv6 forwarding path is a forwarding path of the IPv6 packet. The first IPv6 forwarding path may be a tunnel.

According to a second aspect, a packet mirroring method is provided. The method includes: A second network device receives a service packet. The second network device determines a first mirroring index based on a second mapping relationship and feature information in the service packet. The second mapping relationship indicates that the first mirroring index corresponds to the feature information in the service packet. The second network device obtains an IPv6 packet based on the service packet and the first mirroring index. The IPv6 packet includes the service packet and a packet header, and the packet header includes the first mirroring index. The second network device forwards the IPv6 packet.

According to the technical solution provided in this application, a second network device determines a first mirroring index based on a second mapping relationship and feature information in a service packet, an IPv6 packet obtained by the second network device based on the service packet and the first mirroring index includes the service packet and a packet header, and the packet header includes the first mirroring index, so that a mirroring device (for example, a first network device) may determine a packet observing port based on the first mirroring index in the packet header and mirror the IPv6 packet to the packet observing port, and the mirroring device can mirror the IPv6 packet based on the feature information in the service packet included in the IPv6 packet without performing deep parsing on the IPv6 packet, thereby ensuring forwarding efficiency of the IPv6 packet.

Optionally, the packet header includes an IPv6 basic header and an IPv6 extension header, and the IPv6 extension header includes the first mirroring index.

Optionally, the IPv6 extension header includes an SRH.

Optionally, the IPv6 extension header includes a BIER header.

Optionally, the BIER header is a BIERv6 header or a BIERin6 header.

Optionally, the method further includes: The second network device receives the second mapping relationship sent by a network management device.

According to the technical solution provided in this application, a second network device receives a second mapping relationship sent by a network management device, so that when the second network device receives a service packet, the second network device determines a first mirroring index based on the second mapping relationship and feature information in the service packet and obtains an IPv6 packet based on the service packet and the first mirroring index.

Optionally, the feature information includes at least one of the following: an n-tuple, a source MAC address, and priority information, where n is a positive integer.

Optionally, the second network device is an ingress device on a first IPv6 forwarding path, and the first IPv6 forwarding path is a forwarding path of the IPv6 packet. The first IPv6 forwarding path may be a tunnel.

According to a third aspect, a packet mirroring method is provided. The method includes: A network management device generates a first mapping relationship and a second mapping relationship. The first mapping relationship indicates that a first mirroring index corresponds to packet observing port information, the packet observing port information indicates a packet observing port in a first network device, and the second mapping relationship indicates that the first mirroring index corresponds to feature information in a service packet. The network management device sends the first mapping relationship to the first network device. The network management device sends the second mapping relationship to a second network device.

According to the technical solution provided in this application, a network management device sends a second mapping relationship to a second network device, so that when the second network device receives a service packet, the second network device determines a first mirroring index based on the second mapping relationship and feature information in the service packet; and the network management device sends a first mapping relationship to a first network device, so that when the first network device receives an IPv6 packet including the service packet and a packet header, the first network device determines packet observing port information based on the first mapping relationship and the first mirroring index in the packet header and mirrors the IPv6 packet to a packet observing port indicated by the packet observing port information.

Optionally, the second network device is configured to forward the IPv6 packet to the first network device based on the second mapping relationship, the IPv6 packet includes the service packet and the packet header, and the packet header includes the first mirroring index; and the first network device is configured to mirror, based on the first mapping relationship, the IPv6 packet to the packet observing port indicated by the packet observing port information.

Optionally, the first network device is a transit device or an egress device on a first IPv6 forwarding path, the second network device is an ingress device on the first IPv6 forwarding path, and the first IPv6 forwarding path is a forwarding path of the IPv6 packet.

According to a fourth aspect, a packet mirroring apparatus is provided, and is used in a first network device. The packet mirroring apparatus includes modules configured to perform the method according to the first aspect or any optional manner of the first aspect.

According to a fifth aspect, a packet mirroring apparatus is provided, and is used in a second network device. The packet mirroring apparatus includes modules configured to perform the method according to the second aspect or any optional manner of the second aspect.

According to a sixth aspect, a packet mirroring apparatus is provided, and is used in a network management device. The packet mirroring apparatus includes modules configured to perform the method according to the third aspect or any optional manner of the third aspect.

The modules described in the fourth aspect to the sixth aspect may be implemented based on software, hardware, or a combination of software and hardware, and the modules may be randomly combined or divided based on specific implementation.

According to a seventh aspect, a packet mirroring apparatus is provided, and is used in a first network device. The packet mirroring apparatus includes a memory and a processor; the memory is configured to store a computer program; and the processor is configured to execute the computer program stored in the memory, to enable the packet mirroring apparatus to perform the method according to the first aspect or any optional manner of the first aspect.

According to an eighth aspect, a packet mirroring apparatus is provided, and is used in a second network device. The packet mirroring apparatus includes a memory and a processor; the memory is configured to store a computer program; and the processor is configured to execute the computer program stored in the memory, to enable the packet mirroring apparatus to perform the method according to the second aspect or any optional manner of the second aspect.

According to a ninth aspect, a packet mirroring apparatus is provided, and is used in a network management device. The packet mirroring apparatus includes a memory and a processor; the memory is configured to store a computer program; and the processor is configured to execute the computer program stored in the memory, to enable the packet mirroring apparatus to perform the method according to the third aspect or any optional manner of the third aspect.

According to a tenth aspect, a packet mirroring system is provided. The packet mirroring system includes a first network device and a second network device; and the first network device includes the packet mirroring apparatus according to the fourth aspect, and the second network device includes the packet mirroring apparatus according to the fifth aspect; or the first network device includes the packet mirroring apparatus according to the seventh aspect, and the second network device includes the packet mirroring apparatus according to the eighth aspect.

Optionally, the packet mirroring system further includes a network management device. The network management device includes the packet mirroring apparatus according to the sixth aspect, or the network management device includes the packet mirroring apparatus according to the ninth aspect.

According to an eleventh aspect, a computer-readable storage medium is provided. The computer-readable storage medium stores a computer program, and when the computer program is executed, the method according to the first aspect or any optional manner of the first aspect is implemented; or the method according to the second aspect or any optional manner of the second aspect is implemented; or the method according to the third aspect or any optional manner of the third aspect is implemented.

According to a twelfth aspect, a computer program product is provided. The computer program product includes a program or code, and when the program or the code is executed, the method according to the first aspect or any optional manner of the first aspect is implemented; or the method according to the second aspect or any optional manner of the second aspect is implemented; or the method according to the third aspect or any optional manner of the third aspect is implemented.

According to a thirteenth aspect, a chip is provided. The chip includes a programmable logic circuit and/or program instructions, and when running, the chip is configured to implement the method according to the first aspect or any optional manner of the first aspect, or implement the method according to the second aspect or any optional manner of the second aspect, or implement the method according to the third aspect or any optional manner of the third aspect.

For technical effects of the fourth aspect to the thirteenth aspect, refer to the first aspect to the third aspect. Details are not described herein again.

### BRIEF DESCRIPTION OF DRAWINGS

FIG. 1 is a schematic diagram of a communication system according to an embodiment of this application;
FIG. 2 is a flowchart of a packet mirroring method according to an embodiment of this application;
FIG. 3 is a schematic diagram of an IPv6 packet according to an embodiment of this application;
FIG. 4 is a schematic diagram of another IPv6 packet according to an embodiment of this application;
FIG. 5 is a schematic diagram of still another IPv6 packet according to an embodiment of this application;
FIG. 6 is a flowchart of another packet mirroring method according to an embodiment of this application;
FIG. 7 is a schematic diagram of a packet mirroring apparatus according to an embodiment of this application;
FIG. 8 is a schematic diagram of another packet mirroring apparatus according to an embodiment of this application;
FIG. 9 is a schematic diagram of still another packet mirroring apparatus according to an embodiment of this application;
FIG. 10 is a schematic diagram of yet another packet mirroring apparatus according to an embodiment of this application; and
FIG. 11 is a schematic diagram of still yet another packet mirroring apparatus according to an embodiment of this application.

### DESCRIPTION OF EMBODIMENTS

The following further describes implementations of this application with reference to the accompanying drawings.

A network device generally has a packet mirroring function. The packet mirroring function refers to a function of the network device to replicate a packet to a specified port of the network device. The specified port is also referred to as a packet observing port, and the network device including the specified port (or the network device having the packet mirroring function) is also referred to as a mirroring device. The specified port is generally connected to a monitoring platform, and the monitoring platform may analyze and monitor network traffic of the specified port.

Currently, a packet mirroring solution includes a port-based packet mirroring solution and a 5-tuple-based packet mirroring solution.

In the port-based packet mirroring solution, the mirroring device performs packet mirroring at a granularity of a port. For example, the mirroring device mirrors all packets forwarded through a port of the mirroring device to a packet observing port of the mirroring device, and/or the mirroring device mirrors all packets received through the port of the mirroring device to the packet observing port of the mirroring device. However, network traffic of a port is large. In the port-based packet mirroring solution, network traffic required for mirroring is large, and network traffic required to be analyzed and monitored by the monitoring platform is large, so that pressure of the monitoring platform is high, and a requirement on a capability of the monitoring platform is high.

In the 5-tuple-based packet mirroring solution, the mirroring device performs packet mirroring at a granularity of a 5-tuple. For example, the mirroring device identifies a packet carrying a specific 5-tuple based on an access control list (access control list, ACL) rule, and mirrors the packet carrying the specific 5-tuple to a packet observing port of the mirroring device. In the packet mirroring solution, network traffic required for mirroring is small, network traffic required to be analyzed and monitored by the monitoring platform is small, so that pressure of the monitoring platform is small. The packet mirroring solution has a small mirroring granularity and is suitable for packet mirroring of specific services such as a tool service and an important service.

With development of network technologies, an internet protocol version 6 (internet protocol version 6, IPv6) network, for example, a segment routing internet protocol version 6 (segment routing internet protocol version 6, SRv6) network, is widely used. An IPv6 packet that the IPv6 network bears generally includes a service packet and a packet header (for example, referred to as an IPv6 protocol header) encapsulated outside the service packet, and a 5-tuple is included in the service packet. A network device in the IPv6 network generally needs to parse only the IPv6 protocol header to forward the IPv6 packet, and the 5-tuple in the service packet is generally invisible to the network device in the IPv6 network. However, in the IPv6 network, if packet mirroring is performed based on the 5-tuple, the network device not only needs to parse the IPv6 protocol header, but also needs to parse the service packet included in the IPv6 packet. That is, the network device needs to parse the IPv6 protocol header of the IPv6 packet and the service packet included in the IPv6 packet layer by layer to obtain the 5-tuple of the service packet. The network device needs to perform deep parsing on the IPv6 packet, and forwarding efficiency of the IPv6 packet and forwarding performance of the network device are prone to be affected by such deep parsing.

A packet mirroring solution is provided in this application. An IPv6 packet that needs to be mirrored includes a service packet and a packet header. The packet header includes a first mirroring index, and the first mirroring index corresponds to feature information in the service packet. After a first network device receives the IPv6 packet, the first network device determines packet observing port information based on a first mapping relationship and the first mirroring index in the packet header and mirrors the IPv6 packet to a packet observing port indicated by the packet observing port information. Therefore, the first network device can mirror the IPv6 packet based on the feature information in the service packet included in the IPv6 packet without performing deep parsing on the IPv6 packet, thereby ensuring forwarding efficiency of the IPv6 packet and forwarding performance of the network device.

The following describes the technical solutions of this application, and an application scenario of embodiments of this application is first described.

A communication system is provided in the application scenario of embodiments of this application. The communication system includes an IPv6 network and user equipment accessing the IPv6 network. The IPv6 network may be a unicast network or a multicast network. For example, the IPv6 network is an SRv6 network or a bit index explicit replication (bit index explicit replication, BIER) network, and the BIER network may be a bit index explicit replication internet protocol version 6 (bit index explicit replication internet protocol version 6, BIERv6) network or a bit index explicit replication in internet protocol version 6 (bit index explicit replication in internet protocol version 6, BIERin6) network.

The IPv6 network includes a plurality of network devices, and the plurality of network devices are communicatively connected. The network device may be a device, such as a switch, a router, a virtual switch, or a virtual router, configured to forward a packet. The plurality of network devices may be network devices of a same type. For example, the plurality of network devices are all switches. Alternatively, types of at least two devices in the plurality of network devices are different. For example, some network devices in the plurality of network devices are routers, and the other network devices are switches. According to a deployment location, the plurality of network devices include an edge network device, and may further include a core network device. The edge network device is located at an edge of the IPv6 network, and the core network device is located at a core location of the IPv6 network. For example, the edge network device is a provider edge (provider edge, PE) device, and the core network device is a provider (provider, P) device. The edge network device in the IPv6 network may include an ingress device and an egress device. The ingress device is configured to introduce traffic to the IPv6 network, and the egress device is configured to lead traffic in the IPv6 network out of the IPv6 network.

The user equipment is connected to the edge network device in the IPv6 network to access the IPv6 network. Optionally, the user equipment is connected to the edge network device in the IPv6 network through an access device or an access network (that is, an access device or an access network is connected between the user equipment and the edge network device in the IPv6 network). The access device may be the device, such as the switch, the router, the virtual switch, or the virtual router, configured to forward the packet. For example, the access device is a customer edge (customer edge, CE) device. The access network includes a plurality of access devices that are communicatively connected. The user equipment accessing the IPv6 network may be a host, a user terminal, a home gateway, a server, a virtual machine (virtual machine, VM) created in a server, or the like. The user equipment accessing the IPv6 network may include a source device and a destination device, where the source device is connected to the ingress device in the IPv6 network, and the destination device is connected to the egress device in the IPv6 network.

In embodiments of this application, all network devices in the IPv6 network may support IPv6 forwarding, and the network device in the IPv6 network may be referred to as an IPv6 network device or an IPv6 forwarding device. In an embodiment, the IPv6 network is a unicast network and is an SRv6 network. All network devices in the SRv6 network support SRv6 forwarding, and the network device in the SRv6 network may be referred to as an SRv6 network device or an SRv6 forwarding device. In another embodiment, the IPv6 network is a multicast network and is a BIER network, for example, a BIERv6 network or a BIERin6 network. All network devices in the BIER network support BIER forwarding, and the network device in the BIER network may be referred to as a BIER network device or a BIER forwarding device. For example, all network devices in the BIER network are bit-forwarding routers (bit-forwarding router, BFR), an ingress device in the BIER network is a bit forwarding ingress router (bit forwarding ingress router, BFIR), and an egress device in the BIER network is a bit forwarding egress router (bit forwarding egress router, BFER).

In embodiments of this application, at least one network device in the IPv6 network has a packet mirroring function to perform packet mirroring. For ease of description, the network device that has the packet mirroring function is referred to as a mirroring device. The communication system may further include a monitoring platform. The monitoring platform is connected to a packet observing port of the mirroring device, to analyze and monitor network traffic transmitted by the packet observing port, and the like. The monitoring platform may be a monitoring device, or may be a monitoring system or a monitoring network formed by a plurality of monitoring devices. The monitoring platform and the packet observing port of the mirroring device may be directly connected, or may be connected through a transmission network. The monitoring device may be a host, a server, a computer, or the like.

Optionally, the communication system further includes a network management device, and the network management device is connected to at least one network device in the IPv6 network, to control the at least one network device. For example, the network management device controls a network device in the IPv6 network to forward a packet. The network management device integrates functions such as network management, service control, and network analysis. The network management device may be a server, or a server cluster formed by several servers, or a cloud computing service center. In some embodiments, the network management device is also referred to as a network management device, a network control device, a network controller, a control device, or the like.

In embodiments of this application, the IPv6 network includes an IPv6 forwarding path, and the IPv6 forwarding path includes a plurality of network devices. The network devices on the IPv6 forwarding path include an ingress (ingress) device, an egress (egress) device, and a transit (transit) device located between the ingress device and the egress device. A quantity of transit devices varies according to a length of the IPv6 forwarding path, or the IPv6 forwarding path includes only the ingress device and the egress device, but does not include the transit device. Optionally, the IPv6 forwarding path passes through the IPv6 network, the ingress device on the IPv6 forwarding path and an ingress device of the IPv6 network are a same network device, and the egress device on the IPv6 forwarding path and an egress device of the IPv6 network are a same network device. In an embodiment, the IPv6 network is a unicast network, and the IPv6 forwarding path is a unicast forwarding path. In another embodiment, the IPv6 network is a multicast network, and the IPv6 forwarding path is a multicast forwarding path. In an optional embodiment, the IPv6 forwarding path is a tunnel. For example, the IPv6 forwarding path is a segment routing traffic engineering (segment routing traffic engineering, SR-TE) tunnel, a resource reservation protocol-traffic engineering (resource reservation protocol-traffic engineering, RSVP-TE) tunnel, an SRv6 tunnel, a point to multipoint (point to multipoint, P2MP) tunnel, or a BIER tunnel. The SRv6 tunnel may be an SRv6 policy (policy) tunnel.

Names of the network device, the ingress device, the transit device, the egress device, the forwarding path, and the like in embodiments of this application are merely examples. In some implementation scenarios, the network device is also referred to as a network node, a forwarding node, a forwarding device, a gateway node, a gateway device, a routing node, a routing device, a switching node, a switching device, or the like. The ingress device is also referred to as an ingress node, a head node (head node), a head node device, a first node, a first node device, or the like. The transit device is also referred to as a transit node, an intermediate node, an intermediate device, or the like. The egress device is also referred to as an egress node, an end node (end node), an end node device, or the like. The forwarding path is also referred to as a transmission path, a communication path, a transmission channel, or the like. This is not limited in embodiments of this application.

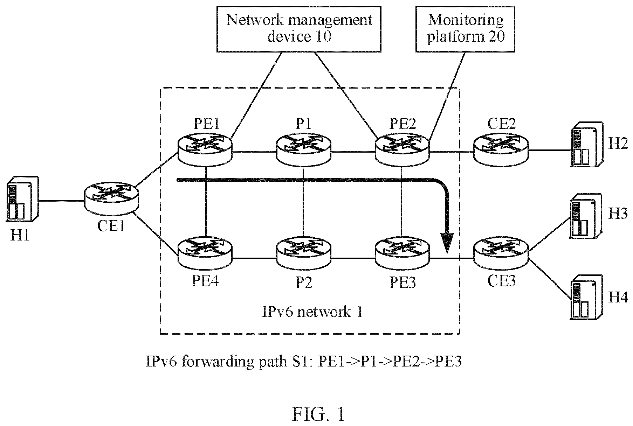

For example, FIG. 1 is a schematic diagram of a communication system according to an embodiment of this application. The communication system includes an IPv6 network 1, a network management device 10, a monitoring platform 20, and user equipment H1 to H4 that access the IPv6 network 1. The IPv6 network 1 is a unicast network or a multicast network. The unicast network may be an SRv6 network, and the multicast network may be a BIER network. The IPv6 network 1 includes six network devices: PE1 to PE4, P1, and P2. The PE1 to PE4 are all edge network devices in the IPv6 network 1. The P1 and the P2 are core network devices in the IPv6 network 1. The user equipment H1 is separately connected to the PE1 and the PE4 through a CE1 to access the IPv6 network 1. The user equipment H2 is connected to the PE2 through a CE2 to access the IPv6 network 1. The user equipment H3 and H4 are connected to the PE3 through a CE3 to access the IPv6 network 1. Optionally, the PE1 and the PE4 are ingress devices of the IPv6 network 1, the PE2 and the PE3 are egress devices of the IPv6 network 1, the user equipment H1 is a source device, and at least one of the user equipment H2 to H4 is a destination device. In an example, the IPv6 network 1 is a unicast network, the user equipment H1 is a source device, and one of the user equipment H2 to H4 is a destination device. In another example, the IPv6 network 1 is a multicast network, for example, a BIER network. The PE1 to PE4, the P1, and the P2 are all BFRs, the PE1 and the PE4 are both BFIRs, the PE2 and the PE3 are both BFERs, the user equipment H1 is a source device, and at least two of the user equipment H2 to H4 are destination devices. As shown in FIG. 1, the IPv6 network 1 includes an IPv6 forwarding path S1 (PE1->P1->PE2->PE3), the IPv6 forwarding path S1 passes through the IPv6 network 1, the PE1 is an ingress device of the IPv6 forwarding path S1, the P1 and the PE2 are transit devices on the IPv6 forwarding path S1, and the PE3 is an egress device of the IPv6 forwarding path S1. In an example, the IPv6 network 1 is a unicast network, and the IPv6 forwarding path S1 is a unicast forwarding path. In another example, the IPv6 network 1 is a multicast network, and the IPv6 forwarding path S1 is a multicast forwarding path. For example, the IPv6 forwarding path S1 is a path in multicast forwarding paths.

In FIG. 1, the PE2 is a mirroring device for description. The PE2 includes a packet observing port (not shown in FIG. 1). A monitoring platform 20 is connected to the packet observing port of the PE2, to analyze and monitor network traffic of the packet observing port. As shown in FIG. 1, a network management device 10 is separately connected to the PE1 (the ingress device of the IPv6 forwarding path S1) and the PE2, and the network management device 10 may control the PE1 to perform IPv6 encapsulation on a service packet and control the PE2 to perform mirroring on an IPv6 packet. The monitoring platform 20 and the packet observing port of the PE2 may be directly connected, or may be connected through a transmission network. This is not limited in this embodiment of this application.

The communication system shown in FIG. 1 is merely used as an example, and is not intended to limit technical solutions in this embodiment of this application. In an implementation process, a quantity of network devices, a quantity of mirroring devices, a quantity of network management devices, and a relationship among these devices in the communication system may be configured as required. For example, for brevity, FIG. 1 shows only connection lines between the network management device 10 and the PE1 and between the network management device 10 and the PE2. In actual application, the network management device 10 may be connected to the PE1 to PE4, the P1, and the P2, and the network management device 10 may also be connected to the CE1 to CE3. In addition, whether a network device is a mirroring device may be implemented through configuration. For example, if a function is configured for a network device to enable the network device to have a packet mirroring function, the network device may be used as a mirroring device. Any network device may be used as a mirroring device. A same mirroring device may perform packet mirroring on different data flows, and different mirroring devices may also perform packet mirroring on a same data flow. In FIG. 1, an example in which the mirroring device is the transit device on the IPv6 forwarding path S1 is used for description. The mirroring device may alternatively be the ingress device or the egress device on the IPv6 forwarding path S1. This is not limited in this embodiment of this application. In addition, the "communication system" and the "communication system" in this application are equivalent concepts, and the two are interchangeable.

The foregoing describes an application scenario of this application, and the following describes an embodiment of a packet mirroring method in this application.

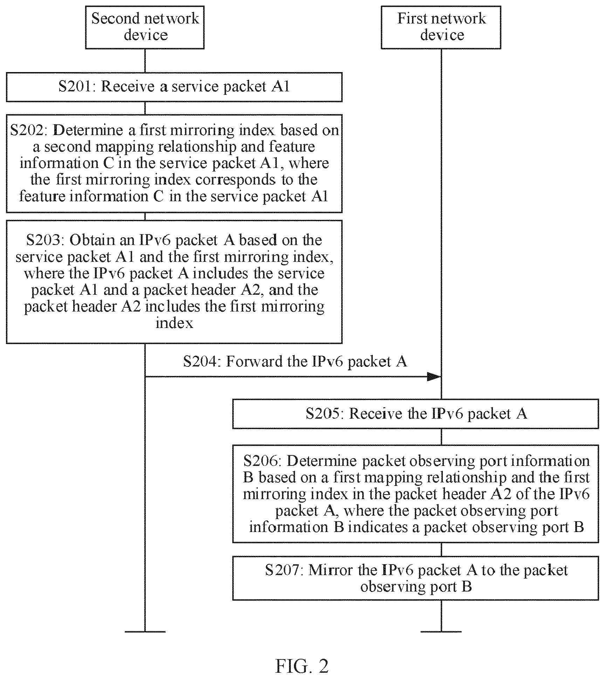

FIG. 2 is a flowchart of a packet mirroring method according to an embodiment of this application. The packet mirroring method is applied to an IPv6 network including a first network device and a second network device. The second network device is an ingress device on a first IPv6 forwarding path, and the second network device is a transit device or an egress device on the first IPv6 forwarding path. For example, the IPv6 network is the IPv6 network 1 shown in FIG. 1, the first IPv6 forwarding path is the IPv6 forwarding path S1, the first network device is the PE2, and the second network device is the PE1. As shown in FIG. 2, the packet mirroring method includes the following steps S201 to S207.

S201: The second network device receives a service packet A1.

The second network device receives the service packet A1 from a previous-hop device of the second network device. For example, as shown in FIG. 1, the second network device is the PE1, the previous-hop device of the second network device is the CE1, and the PE1 receives the service packet A1 from the CE1.

S202: The second network device determines a first mirroring index based on a second mapping relationship and feature information C in the service packet A1, where the first mirroring index corresponds to the feature information C in the service packet A1.

The second network device may parse the service packet A1 to obtain the feature information C in the service packet A1, and then the second network device determines the first mirroring index based on the second mapping relationship and the feature information C in the service packet A1. The second mapping relationship indicates that the first mirroring index corresponds to the feature information C in the service packet A1. For example, the second mapping relationship includes a correspondence between the feature information C in the service packet A1 and the first mirroring index, and the correspondence indicates that the feature information C corresponds to the first mirroring index. The feature information C includes at least one of the following: an n-tuple, a source media access control (media access control, MAC) address, and priority information, where n is a positive integer. The n-tuple may be a 1-tuple, a 2-tuple, a 3-tuple, a 5-tuple, or the like. The 5-tuple includes a source internet protocol (internet protocol, SIP) address, a destination internet protocol (destination internet protocol, DIP) address, a source port number, a destination port number, and a transport layer protocol. The 1-tuple includes a tuple in the 5-tuple. The 2-tuple includes two tuples in the 5-tuple. The 3-tuple includes three tuples in the 5-tuple. The priority information may be class of service (class of service, COS) priority information, type of service (type of service, TOS) priority information, or differentiated services code point (differentiated services code point, DSCP) information. A COS priority is also referred to as an 802.1p priority. "802.1p" is short for Institute of Electrical and Electronics Engineers (Institute of Electrical and Electronics Engineers, IEEE) 802.1p, and the "802.1p" is one of IEEE 802.1 series protocols.

In an optional embodiment, the second mapping relationship is for recording a correspondence between feature information of a packet and a mirroring index, and the second mapping relationship includes the correspondence between the feature information C in the service packet A1 and the first mirroring index. The second network device searches the second mapping relationship based on the feature information C, and the second network device determines a mirroring index corresponding to the feature information C in the second mapping relationship as the first mirroring index. In an example, the second mapping relationship is shown in the following Table 1.

**Table 1**

| Packet feature information | Mirroring index |
|---|---|
| FI-1 | MI-1 |
| FI-2 | MI-2 |
| FI-3 | MI-3 |
| ... | ... |

As shown in Table 1, the packet feature information "FI-1" corresponds to the mirroring index "MI-1", the packet feature information "FI-2" corresponds to the mirroring index "MI-2", the packet feature information "FI-3" corresponds to the mirroring index "MI-3", and so on. For example, the packet feature information "FI-1" is the 1-tuple (for example, 1.1.1.1), the packet feature information "FI-2" is the 5-tuple, the packet feature information "FI-3" is the source MAC address, the mirroring index "MI-1" is "1", the mirroring index "MI-2" is "2", and the mirroring index "MI-3" is "3". An example of the mirroring index herein is merely used as an example. The mirroring index in this application is any possible index information that can be for packet mirroring and that corresponds to feature information in a service packet. For example, the feature information C in the service packet A1 is the "FI-1", the second network device searches the second mapping relationship shown in Table 1 based on the feature information C, and the second network device determines, based on a search result, that the first mirroring index is the "MI-1".

In an optional embodiment, the second mapping relationship is associated with (or referred to as bound to, corresponding to, or the like) the first IPv6 forwarding path, the packet feature information recorded in the second mapping relationship is feature information in a service packet that the first IPv6 forwarding path bears, and the mirroring index recorded in the second mapping relationship is for mirroring an IPv6 packet transmitted on the first IPv6 forwarding path. The service packet that the first IPv6 forwarding path bears includes a service packet that needs to be diverted by the second network device to the first IPv6 forwarding path and/or a service packet included in the IPv6 packet transmitted on the first IPv6 forwarding path. For example, the second mapping relationship records indication information of the first IPv6 forwarding path, so that the second mapping relationship is associated with the first IPv6 forwarding path. The indication information of the first IPv6 forwarding path may be a path identifier of the first IPv6 forwarding path. For example, the first IPv6 forwarding path is an SRv6 forwarding path, and the indication information of the first IPv6 forwarding path is a segment list indicating the first IPv6 forwarding path. After the second network device receives the service packet A1, the second network device determines that an IPv6 forwarding path configured to bear the service packet A1 is the first IPv6 forwarding path, and the second network device determines the first mirroring index based on the second mapping relationship and the feature information C in the service packet A1. The first IPv6 forwarding path may be a tunnel.

In an example, the second mapping relationship is shown in the following Table 2.

**Table 2**

| Indication information of the first IPv6 forwarding path | Packet feature information | Mirroring index |
|---|---|---|
| S1 | FI-1 | MI-1 |
| | FI-2 | MI-2 |
| | FI-3 | MI-3 |
| | ... | ... |

S203: The second network device obtains an IPv6 packet Abased on the service packet A 1 and the first mirroring index, where the IPv6 packet A includes the service packet A1 and a packet header A2, and the packet header A2 includes the first mirroring index.

The second network device is the ingress device on the first IPv6 forwarding path, and the first IPv6 forwarding path is a forwarding path of the IPv6 packet A. The second network device may generate the packet header A2 including the first mirroring index, and the second network device encapsulates the packet header A2 outside the service packet A1 to obtain the IPv6 packet A. The first IPv6 forwarding path may be a tunnel.

In an optional embodiment, the packet header A2 includes an IPv6 basic header (basic header) and an IPv6 extension header (extension header). The IPv6 extension header and the IPv6 basic header are sequentially located outside the service packet A1, and the IPv6 extension header includes the first mirroring index. The second network device first generates the IPv6 basic header and the IPv6 exttension header including the first mirroring index, and then the second network device sequentially encapsulates the IPv6 extension header and the IPv6 basic header outside the service packet A1. Optionally, the packet header A2 further includes another packet header. For example, the packet header A2 further includes an ethernet header (ethernet header, ETH).

The first IPv6 forwarding path in this application may be a unicast forwarding path, or may be a multicast forwarding path. Correspondingly, the IPv6 extension header may include a unicast extension header, or may include a multicast extension header. The following describes two cases.

Case 1: The first IPv6 forwarding path is the unicast forwarding path, and the IPv6 extension header includes the unicast extension header.

For example, the first IPv6 forwarding path is the SRv6 forwarding path, the IPv6 packet A is an SRv6 packet, and the IPv6 extension header is an SRH. The SRH includes an SRH basic header, a segment list (segment list), and a type-length-value (type-length-value, TLV) field. The segment list includes a plurality of segment identifiers (segment identifier, SID) arranged in sequence. The plurality of segment identifiers SID are in a one-to-one correspondence with a plurality of network devices along the first IPv6 forwarding path. Each network device in the plurality of network devices forwards the IPv6 packet A based on a corresponding SID. In an embodiment, the first mirroring index is located in the TLV field. In another embodiment, the first mirroring index is located in the segment list. For example, the first mirroring index is located in an arguments (arguments) field of a first SID, and the first SID is a SID corresponding to the first network device (namely, a mirroring device).

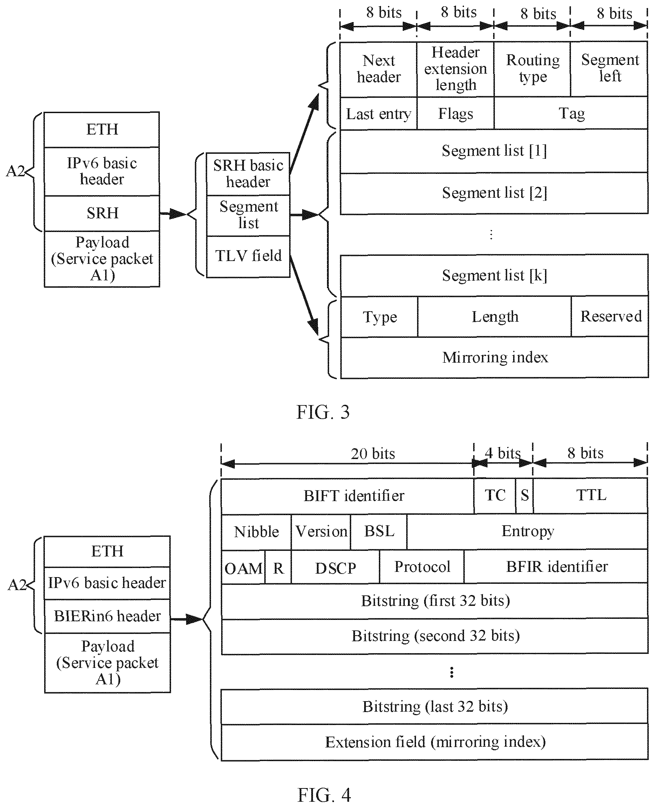

An example in which the first mirroring index is located in the TLV field in the SRH is used for description. For example, FIG. 3 is a schematic diagram of an IPv6 packet A according to an embodiment of this application. The IPv6 packet A is an SRv6 packet, the IPv6 packet A includes a service packet A1 and a packet header A2, and the service packet A1 is a payload (payload) of the IPv6 packet A. The packet header A2 includes an SRH, an IPv6 basic header, and an ETH that are sequentially distributed in an order from inside to outside (namely, in a direction away from the service packet A1). The SRH includes an SRH basic header, a segment list, and a TLV field. The TLV field includes a type subfield, a length subfield, a reserved subfield, and a mirroring index subfield. The type subfield indicates a type of the TLV field, and the type of the TLV field is a mirroring type. The length subfield indicates a length of a data subfield (namely, the mirroring index subfield) in the TLV field. The mirroring index subfield carries a mirroring index, and a first mirroring index is located in the mirroring index subfield. As shown in FIG. 3, the segment list includes a segment list [1] to a segment list [k] that are sequentially arranged, and each segment list in the segment list [1] to the segment list [k] is a SID. Therefore, the segment list includes k SIDs that are sequentially arranged, the k SIDs are in a one-to-one correspondence with k network devices along a first IPv6 forwarding path, a first network device is a network device in the k network devices, and a first SID in the k SIDs corresponds to the first network device, where k is a positive integer. Optionally, the first mirroring index is used by the first network device to mirror the IPv6 packet A, a type of the first SID is a target type, and the target type indicates the first network device to process the TLV field to mirror the IPv6 packet A. For example, the target type is an END.MI, that is, the first SID is an END.MI SID.

The SRH basic header is configured to carry SRH basic information. The SRH basic header includes the following fields: next header (next header, NH), header extension length (header extension length, HLEN), routing type (routing type), segments left (segments left, SL), last entry (last entry), flags (flags), and tag (tag). The IPv6 basic header is configured to carry IPv6 basic information. The IPv6 basic header generally includes the following fields (not shown in FIG. 3): version (version), traffic class (traffic class, TC), flow label (flow label), payload length (payload length), next header, hop limit (hop limit), source (source) address, and destination (destination) address. The ETH is configured to carry Ethernet information. For content about the SRH basic header, the IPv6 basic header, and the ETH, refer to a related standard document. Details are not described herein again.

Case 2: The first IPv6 forwarding path is the multicast forwarding path, and the IPv6 extension header includes the multicast extension header.

For example, the first IPv6 forwarding path is a BIER forwarding path, the IPv6 packet A is a BIER packet, and the IPv6 extension header includes a BIER header. The BIER header may be a BIERv6 header or a BIERin6 header. In an embodiment, the BIER header includes an extension field, and the first mirroring index is located in the extension field. In another embodiment, the BIER header includes a reserved field, and the first mirroring index is located in the reserved field. Optionally, the IPv6 packet A includes the IPv6 extension header, and the IPv6 extension header includes the BIERv6 header (that is, the BIERv6 header is located in the IPv6 extension header). For example, the BIERv6 header is an option (option) field in the IPv6 extension header. For example, the IPv6 extension header is a destination options header (destination options header, DOH) or a hop-by-hop options header (hop-by-hop options header, HBH), and the BIERv6 header is an option field in the DOH or the HBH. If the IPv6 extension header is the DOH, a destination device (for example, the egress device on the first IPv6 forwarding path) of the IPv6 packet A processes the DOH to mirror the IPv6 packet. The mirroring device may be the destination device of the IPv6 packet A, for example, the mirroring device is the egress device on the first IPv6 forwarding path. If the IPv6 extension header is the HBH, all network devices along a path of the IPv6 packet A process the HBH to mirror the IPv6 packet, and all the network devices along the path of the IPv6 packet A are mirroring devices.

For example, FIG. 4 is a schematic diagram of another IPv6 packet A according to an embodiment of this application. The IPv6 packet A is a BIERin6 packet, the IPv6 packet A includes a service packet A1 and a packet header A2, and the service packet A1 is a payload of the IPv6 packet A. The packet header A2 includes a BIERin6 header (namely, an IPv6 extension header), an IPv6 basic header, and an ETH that are sequentially distributed in an order from inside to outside (namely, in a direction away from the service packet A1). The BIERin6 header includes the following fields: bit index forwarding table (bit index forwarding table, BIFT) identifier, traffic class (traffic class, TC), S, time to live (time to live, TTL), nibble (nibble), version (version), bitstring length (bitstring length, BSL), entropy (entropy), operations, administration, and maintenance (operations, administration, and maintenance, OAM), reserved (reserved, R), differentiated services code point (differentiated services code point, DSCP), protocol (protocol), bit-forwarding ingress router (bit-forwarding ingress router, BFIR) identifier, bitstring (bitstring), and extension field. The extension field is a field that is extended in the BIERin6 header and that is configured to carry a mirroring index, and a first mirroring index is located in the extension field. In an example, the reserved (reserved, R) field in the BIERin6 header indicates a meaning of the extension field. In another example, the extension field is a TLV field, the extension field includes a type subfield, and the type subfield indicates a meaning of the extension field. For example, for a structure of the extension field, refer to a structure of the TLV field in FIG. 3. In still another example, the extension field includes a mirroring index subfield and a flags subfield (not shown in FIG. 4), the mirroring index subfield carries the mirroring index, the flags subfield may be adjacent to a high bit of the mirroring index subfield, and the flags subfield indicates a meaning of the mirroring index subfield.

The BIFT identifier field carries a BIFT identifier, and one BIFT identifier corresponds to a specific combination of a BSL, a sub-domain (sub-domain, SD), and a set identifier (set identifier, SI). The TC field carries traffic class information. The S field is also referred to as an S flag bit. The TTL field carries a time to live of the BIERin6 packet (namely, the IPv6 packet A). The version field carries a version of the BIERin6 header. The entropy field carries an "entropy" value to perform equivalent load balancing in a BIER forwarding process. The OAM field carries OAM information, and the OAM field may be generally reserved. The DSCP field carries DSCP information. The protocol field carries a type of the payload. The BFIR identifier field carries an identifier of a BFIR (for example, a second network device). A bitstring field carries a bitstring. The bitstring includes a plurality of bits in a one-to-one correspondence to a plurality of bit-forwarding egress routers (bit-forwarding egress router, BFER) of the BIERin6 packet (for example, the IPv6 packet A). The bitstring and an SI and an SD of the BIERin6 packet together identify the BFER of the BIERin6 packet. The SI and the SD of the BIERin6 packet are determined based on the BIFT identifier carried in the BIERin6 header, and the bitstring field is generally increased by a fixed length of 32 bits. The BSL field carries a length of the bitstring field. The IPv6 basic header generally includes the following fields: version, traffic class, flow label, payload length, next header, hop limit, source address, and destination address. The ETH is configured to carry Ethernet information. For content about the IPv6 basic header and the ETH, refer to a related standard document. Details are not described herein again.

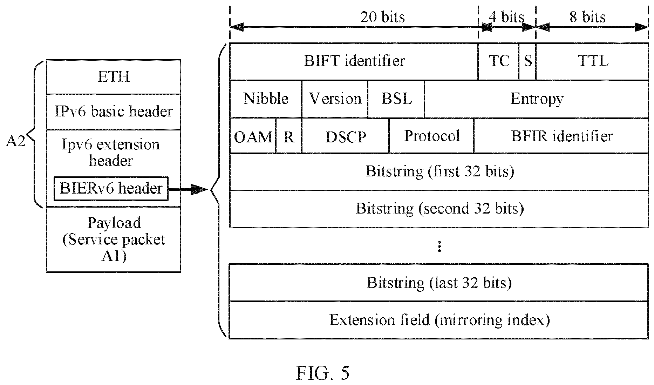

For example, FIG. 5 is a schematic diagram of still another IPv6 packet A according to an embodiment of this application. The IPv6 packet A is a BIERv6 packet, the IPv6 packet A includes a service packet A1 and a packet header A2, and the service packet A1 is a payload of the IPv6 packet A. The packet header A2 includes an IPv6 extension header, an IPv6 basic header, and an ETH that are sequentially distributed in an order from inside to outside (namely, in a direction away from the service packet A1). The IPv6 extension header may be a DOH or an HBH, and the IPv6 extension header includes a BIERv6 header. A structure of the BIERv6 header is the same as a structure of the BIERin6 header shown in FIG. 4, and details are not described herein again. For content about the IPv6 basic header and the ETH, refer to a related standard document. Details are not described herein again.

S204: The second network device forwards the IPv6 packet A.

The second network device forwards the IPv6 packet A to a next-hop device of the second network device. The next-hop device of the second network device may be the first network device, or may not be the first network device. For example, as shown in FIG. 1, the second network device is the PE1, the next-hop device of the second network device is the P1, and the PE1 forwards the IPv6 packet A to the P1.

In an embodiment, the IPv6 packet A is the SRv6 packet, the SRH of the IPv6 packet A includes a second SID, the second SID corresponds to the second network device, and the second network device forwards the IPv6 packet A to the next-hop device of the second network device based on the second SID.

In another embodiment, the IPv6 packet A is the BIER packet, the BIER header of the IPv6 packet A includes a bitstring, and the second network device forwards the IPv6 packet A to the next-hop device of the second network device based on the bitstring and a multicast forwarding table of the second network device. The multicast forwarding table may be a bit index forwarding table (bit index forwarding table, BIFT).

S205: The first network device receives the IPv6 packet A.

The first network device is the transit device or the egress device on the first IPv6 forwarding path, the first IPv6 forwarding path is the forwarding path of the IPv6 packet A, and the first network device may receive the IPv6 packet A forwarded by a previous-hop device of the first network device. The previous-hop device of the first network device may be the second network device, or may not be the second network device. For example, as shown in FIG. 1, the first network device is the PE2, the previous-hop device of the first network device is the P1, and the PE2 receives the IPv6 packet A forwarded by the P1.

S206: The first network device determines packet observing port information B based on a first mapping relationship and the first mirroring index in the packet header A2 of the IPv6 packet A, where the packet observing port information B indicates a packet observing port B.

The first network device may parse the IPv6 packet A to obtain the first mirroring index in the packet header A2 of the IPv6 packet A, and the first network device determines the packet observing port information B based on the first mapping relationship and the first mirroring index. The first mapping relationship indicates that the first mirroring index corresponds to the packet observing port information B. For example, the first mapping relationship includes a correspondence between the first mirroring index and the packet observing port information B, and the correspondence indicates that the first mirroring index corresponds to the packet observing port information B. The packet observing port information B may be a port identifier, and the first network device includes the packet observing port B.

In an optional embodiment, the first mapping relationship is for recording the correspondence between a mirroring index and packet observing port information, and the first mapping relationship includes the correspondence between the first mirroring index and the packet observing port information B. The first network device searches the first mapping relationship based on the first mirroring index in the IPv6 packet A, and the first network device determines packet observing port information corresponding to the first mirroring index in the first mapping relationship as the packet observing port information B.

In an example, the first mapping relationship is shown in the following Table 3.

**Table 3**

| Mirroring index | Packet observing port information |
|---|---|
| MI-1 | P1-1 |
| MI-2 | P1-2 |
| MI-3 | P1-3 |
| ... | ... |

As shown in Table 3, the mirroring index "MI-1" corresponds to the packet observing port information "P1-1", the mirroring index "MI-2" corresponds to the packet observing port information "P1-2", the mirroring index "MI-3 " corresponds to the packet observing port information "P1-3", and so on. The packet observing port information "P1-1", the packet observing port information "P1-2", and the packet observing port information "P1-3" may all be indication information indicating a network port, such as the port identifier. For example, the packet observing port information "P1-1" is g1/0/0. For example, the first mirroring index is the "MI-1". The first network device searches the first mapping relationship shown in Table 2 based on the first mirroring index, and determines that the first mirroring index corresponds to the packet observing port information "P1-1". The first network device determines that the "P1-1" is the packet observing port information B, and the packet observing port information "P1-1" indicates the packet observing port B.

In an optional embodiment, the first mapping relationship is associated with (or referred to as bound to, corresponding to, or the like) the first IPv6 forwarding path, and the mirroring index and the packet observing port information that are recorded in the first mapping relationship are for mirroring the IPv6 packet transmitted on the first IPv6 forwarding path. For example, the first mapping relationship records the indication information of the first IPv6 forwarding path, so that the first mapping relationship is associated with the first IPv6 forwarding path. After the first network device receives the IPv6 packet A, the first network device determines that the IPv6 packet A is transmitted on the first IPv6 forwarding path (for example, the IPv6 packet A carries the indication information of the first IPv6 forwarding path), and the first network device determines the packet observing port information B based on the first mapping relationship and the first mirroring index in the packet header A2 of the IPv6 packet A. In an example, the first mapping relationship is shown in the following Table 4.

**Table 4**

| Indication information of the first IPv6 forwarding path | Mirroring index | Packet observing port information |
|---|---|---|
| S1 | MI-1 | P1-1 |
| | MI-2 | P1-2 |
| | MI-3 | P1-3 |
| | ... | ... |

S207: The first network device mirrors the IPv6 packet A to the packet observing port B.

In an optional embodiment, the first network device replicates the IPv6 packet A, and the first network device forwards the replicated IPv6 packet A through the packet observing port B, to mirror the IPv6 packet A to the packet observing port B.

In this embodiment of this application, the packet observing port B is connected to a monitoring platform, the first network device forwards the IPv6 packet A through the packet observing port B, the monitoring platform may receive the IPv6 packet A, and the monitoring platform may analyze and monitor the IPv6 packet A. For example, the monitoring platform parses the IPv6 packet A to obtain the service packet A1 in the IPv6 packet A, and the monitoring platform analyzes the service packet A1 to obtain a packet loss status of a traffic flow to which the service packet A1 belongs. For example, the monitoring platform determines, based on a sequence number of the service packet A1, whether a packet loss occurs in the traffic flow to which the service packet A1 belongs.

In an embodiment, the packet observing port B is directly connected to the monitoring platform (that is, no another device exists between the packet observing port B and the monitoring platform), the first network device forwards the IPv6 packet A to the monitoring platform through the packet observing port B, and the monitoring platform receives the IPv6 packet A forwarded by the first network device. In another embodiment, the packet observing port B is connected to the monitoring platform through a transmission network (that is, another device exists between the packet observing port B and the monitoring platform), the first network device forwards the IPv6 packet A to the transmission network through the packet observing port B, the transmission network forwards the IPv6 packet A to the monitoring platform, and the monitoring platform receives the IPv6 packet A forwarded by the transmission network.

It can be learned from the foregoing description that the second mapping relationship shown in Table 1 and Table 2 is used by the second network device (the ingress device on the first IPv6 forwarding path) to determine the mirroring index based on the feature information in the service packet, and the first mapping relationship shown in Table 3 and Table 4 is used by the first network device (the mirroring device) to determine packet mirroring port information based on the mirroring index in the packet header of the IPv6 packet to mirror the IPv6 packet. Therefore, in an embodiment, Table 1 and/or Table 2 are also referred to as a flow mirroring table, and Table 3 and/or Table 4 are also referred to as a flow observing table. This embodiment of this application is described by using an example in which the second mapping relationship includes the correspondence between the feature information C in the service packet A1 and the first mirroring index. In some embodiments, the second mapping relationship does not include the correspondence between the feature information C in the service packet A1 and the first mirroring index. The second network device searches the second mapping relationship based on the feature information C in the service packet A1 and determines that the feature information C does not hit the second mapping relationship, and the second network device performs IPv6 encapsulation on a service packet A in a conventional IPv6 encapsulation manner. Similarly, this embodiment of this application is described by using an example in which the first mapping relationship includes the correspondence between the first mirroring index and the packet observing port information B. In some embodiments, the first mapping relationship does not include the correspondence between the first mirroring index and the packet observing port information B. The first network device searches the first mapping relationship based on the first mirroring index in the packet header A2 of the IPv6 packet A and determines that the first mirroring index does not hit the first mapping relationship, and the first network device does not mirror the IPv6 packet A.

In conclusion, according to the technical solution provided in this embodiment of this application, an IPv6 packet includes a service packet and a packet header, a first mirroring index in the packet header corresponds to feature information in the service packet, and a first network device determines packet observing port information based on a first mapping relationship and the first mirroring index in the packet header and mirrors the IPv6 packet to a packet observing port indicated by the packet observing port information, so that the first network device can mirror the IPv6 packet based on the feature information in the service packet included in the IPv6 packet without performing deep parsing on the IPv6 packet, thereby ensuring forwarding efficiency of the IPv6 packet.

Before S206, the first network device may obtain the first mapping relationship. Before S202, the second network device may obtain the second mapping relationship. In this embodiment of this application, the first mapping relationship may be generated by the first network device, or may be generated by a network management device. The second mapping relationship may be generated by the second network device, or may be generated by the network management device. Therefore, that the first network device obtains the first mapping relationship includes that the first network device generates the first mapping relationship, or the first network device receives the first mapping relationship sent by the network management device. That the second network device obtains the second mapping relationship includes that the second network device generates the second mapping relationship, or the second network device receives the second mapping relationship sent by the network management device.

In an embodiment, the first mapping relationship is generated by the first network device, and the second mapping relationship is generated by the second network device. The first network device may obtain first configuration information, and generate the first mapping relationship based on the first configuration information. The second network device may obtain second configuration information, and generate the second mapping relationship based on the second configuration information. The first configuration information may be sent by the network management device to the first network device, or may be configured by a staff member in the first network device. The second configuration information may be sent by the network management device to the second network device, or may be configured by the staff member in the second network device. For example, the staff member inputs the first configuration information to the first network device through a command line, and the staff member inputs the second configuration information to the second network device through the command line. In an example, the first configuration information includes the first mirroring index. After the first network device obtains the first configuration information, the first network device determines the packet observing port information B based on the packet observing port B of the first network device, and the first network device generates the first mapping relationship based on the first mirroring index in the first configuration information and the packet observing port information B determined by the first network device. In another example, the first configuration information includes the first mirroring index and the packet observing port information B, and the first network device generates the first mapping relationship based on the first mirroring index in the first configuration information and the packet observing port information B in the first configuration information. The second configuration information may include the first mirroring index and the feature information C in the service packet A1, and the first network device generates the second mapping relationship based on the feature information C in the second configuration information and the first mirroring index in the second configuration information. Optionally, the staff member inputs the first mapping relationship to the first network device through the command line, and the first network device obtains the first mapping relationship input by the staff member; and the staff member inputs the second mapping relationship to the second network device through the command line, and the second network device obtains the second mapping relationship input by the staff member.

In another embodiment, the first mapping relationship and the second mapping relationship are generated by the network management device. After the network management device generates the first mapping relationship and the second mapping relationship, the network management device sends the first mapping relationship to the first network device, and the network management device sends the second mapping relationship to the second network device. The following uses an example in which the first mapping relationship and the second mapping relationship are generated by the network management device for description.

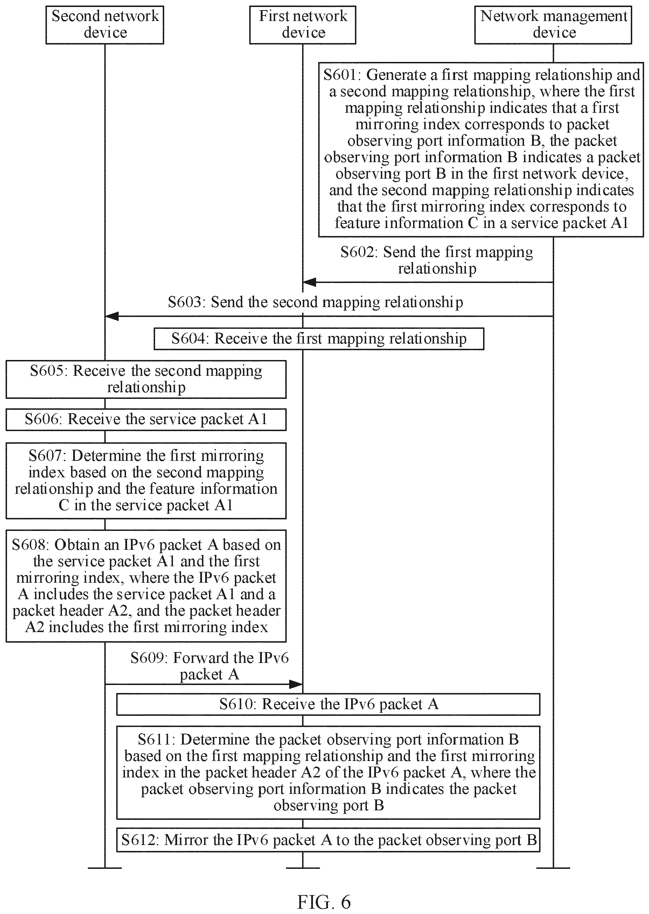

FIG. 6 is a flowchart of another packet mirroring method according to an embodiment of this application. The packet mirroring method is applied to a communication system including a first network device, a second network device, and a network management device. The communication system includes an IPv6 network, and the first network device and the second network device are located in the IPv6 network. The second network device is an ingress device on a first IPv6 forwarding path, the first network device is a transit device or an egress device on the first IPv6 forwarding path, and the network management device is configured to manage the IPv6 network. For example, the communication system is shown in FIG. 1. The IPv6 network is the IPv6 network 1 in FIG. 1, the first IPv6 forwarding path is the IPv6 forwarding path S1, the first network device is the PE2, the second network device is the PE1, and the network management device is the network management device 10. As shown in FIG. 6, the packet mirroring method includes the following steps S601 to S612.

S601: The network management device generates a first mapping relationship and a second mapping relationship, where the first mapping relationship indicates that a first mirroring index corresponds to packet observing port information B, the packet observing port information B indicates a packet observing port B in the first network device, and the second mapping relationship indicates that the first mirroring index corresponds to feature information C in a service packet A1.

The network management device may obtain the feature information C in the service packet A1, the first mirroring index, and the packet observing port information B, the network management device generates the first mapping relationship based on the first mirroring index and the packet observing port information B, and the network management device generates the second mapping relationship based on the feature information C in the service packet A1 and the first mirroring index. For example, the first mapping relationship is for recording a correspondence between a mirroring index and packet observing port information, and the first mapping relationship includes a correspondence between the first mirroring index and the packet observing port information B. The second mapping relationship is for recording a correspondence between feature information of a packet and a mirroring index, and the second mapping relationship includes a correspondence between the feature information C in the service packet A1 and the first mirroring index.

In an embodiment, the network management device obtains observing configuration information and flow feature configuration information, where the observing configuration information includes the first mirroring index and the packet observing port information B, and the flow feature configuration information includes the first mirroring index and the feature information C in the service packet A1. For example, the observing configuration information includes the correspondence between the first mirroring index and the packet observing port information B, and the flow feature configuration information includes the correspondence between the feature information C in the service packet A1 and the first mirroring index, the network management device generates the first mapping relationship based on the observing configuration information, and the network management device generates the second mapping relationship based on the flow feature configuration information. In another embodiment, the network management device obtains observation configuration information and flow feature configuration information, where the observing configuration information includes the packet observing port information B, and the flow feature configuration information includes the feature information C in the service packet A1. The network management device generates the first mirroring index, the network management device generates the first mapping relationship based on the observing configuration information and the first mirroring index, and the network management device generates the second mapping relationship based on the flow feature configuration information and the first mirroring index.

In an optional embodiment, the first mapping relationship and the second mapping relationship are separately associated with the first IPv6 forwarding path. For example, the first mapping relationship and the second mapping relationship each include indication information of the first IPv6 forwarding path. The network management device may determine the indication information of the first IPv6 forwarding path, and the network management device generates the first mapping relationship based on the indication information of the first IPv6 forwarding path, the first mirroring index, and the packet observing port information B. The network management device generates the second mapping relationship based on the indication information of the first IPv6 forwarding path, the feature information C in the service packet A1, and the first mirroring index.

S602: The network management device sends the first mapping relationship to the first network device.

The network management device sends the first mapping relationship to the first network device through a border gateway protocol (border gateway protocol, BGP), a network configuration protocol (network configuration protocol, NETCONF), a path computation element communication protocol (path computation element communication protocol, PCEP), or another proprietary protocol.

For example, the network management device generates a first control packet, the first control packet includes the first mapping relationship, and the network management device sends the first control packet to the first network device. The first control packet may be a BGP packet, a NETCONF packet, a PCEP packet, or a packet of another proprietary protocol.

S603: The network management device sends the second mapping relationship to the second network device.

The network management device sends the second mapping relationship to the second network device through the BGP, the NETCONF, the PCEP, or another proprietary protocol.

For example, the network management device generates a second control packet, the second control packet includes the second mapping relationship, and the network management device sends the second control packet to the second network device. The second control packet may be a BGP packet, a NETCONF packet, a PCEP packet, or a packet of another proprietary protocol.

S604: The first network device receives the first mapping relationship sent by the network management device.

For example, the first network device receives the first control packet sent by the network management device, the first control packet includes the first mapping relationship, and the first network device parses the first control packet to obtain the first mapping relationship.

S605: The second network device receives the second mapping relationship sent by the network management device.

For example, the second network device receives the second control packet sent by the network management device, the second control packet includes the second mapping relationship, and the second network device parses the second control packet to obtain the second mapping relationship.

S606: The second network device receives the service packet A1.

S607: The second network device determines the first mirroring index based on the second mapping relationship and the feature information C in the service packet A1.

S608: The second network device obtains an IPv6 packet A based on the service packet A1 and the first mirroring index, where the IPv6 packet A includes the service packet A1 and a packet header A2, and the packet header A2 includes the first mirroring index.

S609: The second network device forwards the IPv6 packet A.

S610: The first network device receives the IPv6 packet A.

S611: The first network device determines the packet observing port information B based on the first mapping relationship and the first mirroring index in the packet header A2 of the IPv6 packet A, where the packet observing port information B indicates the packet observing port B.

S612: The first network device mirrors the IPv6 packet A to the packet observing port B.

For an implementation process of S606 to S612, refer to the implementation process of S201 to S207. Details are not described herein again.

In conclusion, according to the technical solution provided in this embodiment of this application, an IPv6 packet includes a service packet and a packet header, a first mirroring index in the packet header corresponds to feature information in the service packet, and a first network device determines packet observing port information based on a first mapping relationship and the first mirroring index in the packet header and mirrors the IPv6 packet to a packet observing port indicated by the packet observing port information, so that the first network device can mirror the IPv6 packet based on the feature information in the service packet included in the IPv6 packet without performing deep parsing on the IPv6 packet, thereby ensuring forwarding efficiency of the IPv6 packet.

The foregoing describes method embodiments of this application, and the following describes apparatus embodiments of this application. The apparatus in this application may be configured to perform the method in this application. For details that are not disclosed in the apparatus embodiments of this application, refer to the method embodiments.

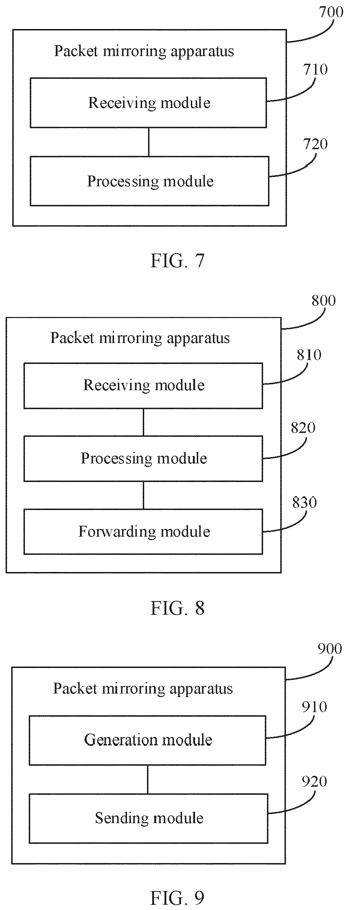

FIG. 7 is a schematic diagram of a packet mirroring apparatus 700 according to an embodiment of this application. The packet mirroring apparatus 700 is used in a first network device. For example, the packet mirroring apparatus 700 is the first network device or a functional component in the first network device. Refer to FIG. 7. The packet mirroring apparatus 700 includes a receiving module 710 and a processing module 720.

The receiving module 710 is configured to receive an IPv6 packet, where the IPv6 packet includes a service packet and a packet header, the packet header includes a first mirroring index, and the first mirroring index corresponds to feature information in the service packet. For function implementation of the receiving module 710, refer to related descriptions in S205.

The processing module 720 is configured to determine packet observing port information based on the first mirroring index and a first mapping relationship, where the packet observing port information indicates a packet observing port, and the first network device includes the packet observing port. For function implementation of the processing module 720, refer to related descriptions in S206.

The processing module 720 is further configured to mirror the IPv6 packet to the packet observing port. For function implementation of the processing module 720, further refer to related descriptions in S207.

Optionally, the packet header includes an IPv6 basic header and an IPv6 extension header, and the IPv6 extension header includes the first mirroring index.

Optionally, the IPv6 extension header includes an SRH.

Optionally, the IPv6 extension header includes a BIER header.

Optionally, the BIER header is a BIERv6 header or a BIERin6 header.

Optionally, the receiving module 710 is further configured to receive the first mapping relationship sent by a network management device. For function implementation of the receiving module 710, further refer to related descriptions in S604.

Optionally, the feature information includes at least one of the following: an n-tuple, a source MAC address, and priority information, where n is a positive integer.

Optionally, the first network device is a transit device or an egress device on a first IPv6 forwarding path, and the first IPv6 forwarding path is a forwarding path of the IPv6 packet.

In conclusion, according to the technical solution provided in this embodiment of this application, an IPv6 packet includes a service packet and a packet header, a first mirroring index in the packet header corresponds to feature information in the service packet, and a first network device determines packet observing port information based on a first mapping relationship and the first mirroring index in the packet header and mirrors the IPv6 packet to a packet observing port indicated by the packet observing port information, so that the first network device can mirror the IPv6 packet based on the feature information in the service packet included in the IPv6 packet without performing deep parsing on the IPv6 packet, thereby ensuring forwarding efficiency of the IPv6 packet.

FIG. 8 is a schematic diagram of another packet mirroring apparatus 800 according to an embodiment of this application. The packet mirroring apparatus 800 is used in a second network device. For example, the packet mirroring apparatus 800 is the second network device or a functional component in the second network device. Refer to FIG. 8. The packet mirroring apparatus 800 includes a receiving module 810, a processing module 820, and a forwarding module 830.

The receiving module 810 is configured to receive a service packet. For function implementation of the receiving module 810, refer to related descriptions in S201.

The processing module 820 is configured to determine a first mirroring index based on a second mapping relationship and feature information in the service packet; and obtain an IPv6 packet based on the service packet and the first mirroring index, where the IPv6 packet includes the service packet and a packet header, and the packet header includes the first mirroring index. For function implementation of the processing module 820, refer to related descriptions in S202 and S203.

The forwarding module 830 is configured to forward the IPv6 packet. For function implementation of the forwarding module 830, refer to related descriptions in S204 and S203.

Optionally, the packet header includes an IPv6 basic header and an IPv6 extension header, and the IPv6 extension header includes the first mirroring index.

Optionally, the IPv6 extension header includes an SRH.

Optionally, the IPv6 extension header includes a BIER header.

Optionally, the BIER header is a BIERv6 header or a BIERin6 header.

Optionally, the receiving module 810 is further configured to receive the second mapping relationship sent by a network management device. For function implementation of the receiving module 810, further refer to related descriptions in S605.

Optionally, the feature information includes at least one of the following: an n-tuple, a source MAC address, and priority information, where n is a positive integer.

Optionally, the second network device is an ingress device on a first IPv6 forwarding path, and the first IPv6 forwarding path is a forwarding path of the IPv6 packet.

In conclusion, according to the technical solution provided in this embodiment of this application, an IPv6 packet obtained by a second network device includes a service packet and a packet header, and a first mirroring index in the packet header corresponds to feature information in the service packet, so that a mirroring device (for example, a first network device) may determine a packet observing port based on the first mirroring index and mirror the IPv6 packet to the packet observing port, and the mirroring device can mirror the IPv6 packet based on the feature information in the service packet included in the IPv6 packet without performing deep parsing on the IPv6 packet, thereby ensuring forwarding efficiency of the IPv6 packet.

FIG. 9 is a schematic diagram of still another packet mirroring apparatus 900 according to an embodiment of this application. The packet mirroring apparatus 900 is used in a network management device. For example, the packet mirroring apparatus 900 is the network management device or a functional component in the network management device. Refer to FIG. 9. The packet mirroring apparatus 900 includes a generation module 910 and a sending module 920.

The generation module 910 is configured to generate a first mapping relationship and a second mapping relationship, where the first mapping relationship indicates that a first mirroring index corresponds to packet observing port information, the packet observing port information indicates a packet observing port in a first network device, and the second mapping relationship indicates that the first mirroring index corresponds to feature information in a service packet. For function implementation of the generation module 910, refer to related descriptions in S601.

The sending module 920 is configured to send the first mapping relationship to the first network device, and configured to send the second mapping relationship to a second network device. For function implementation of the sending module 920, refer to related descriptions in S602 and S603.

Optionally, the second network device is configured to forward an IPv6 packet to the first network device based on the second mapping relationship, the IPv6 packet includes the service packet and a packet header, and the packet header includes the first mirroring index; and the first network device is configured to mirror, based on the first mapping relationship, the IPv6 packet to the packet observing port indicated by the packet observing port information.

Optionally, the first network device is a transit device or an egress device on a first IPv6 forwarding path, the second network device is an ingress device on the first IPv6 forwarding path, and the first IPv6 forwarding path is a forwarding path of the IPv6 packet.

In conclusion, according to the technical solution provided in this application, a network management device sends a second mapping relationship to a second network device, so that when the second network device receives a service packet, the second network device determines a first mirroring index based on the second mapping relationship and feature information in the service packet. The network management device sends a first mapping relationship to a first network device, so that when the first network device receives an IPv6 packet including a service packet and a packet header, the first network device determines a packet observing port based on the first mapping relationship and a first mirroring index in the packet header and mirrors the IPv6 packet to the packet observing port.

The packet mirroring apparatus provided in this embodiment of this application may also be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof. The method provided in the foregoing method embodiment may also be implemented by using software. When the method provided in the foregoing method embodiment is implemented by using software, each module in the foregoing packet mirroring apparatus may also be a software module.

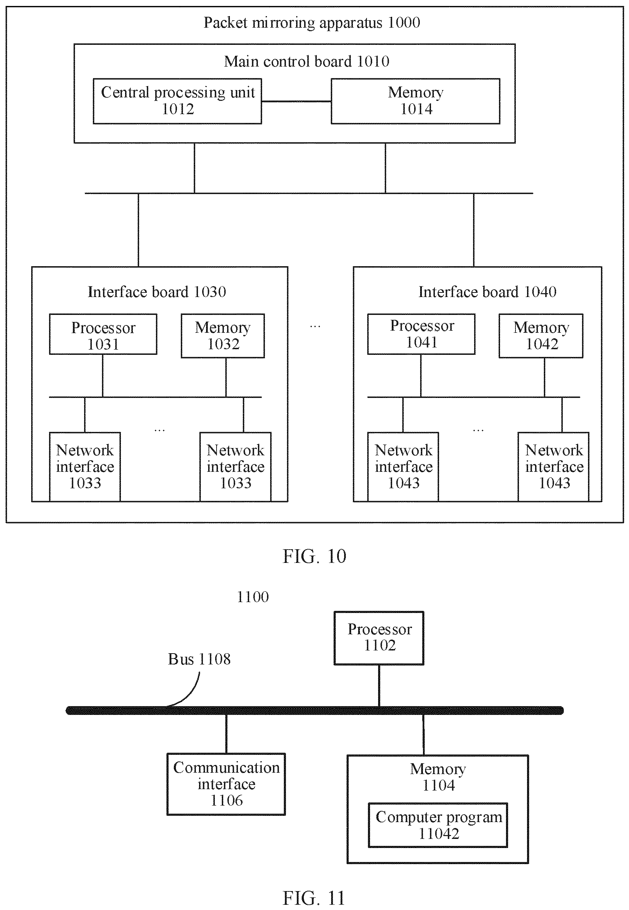

FIG. 10 is a schematic diagram of yet another packet mirroring apparatus 1000 according to an embodiment of this application. The packet mirroring apparatus 1000 is a network device or a functional component in a network device. The packet mirroring apparatus 1000 includes a main control board 1010, an interface board 1030, and an interface board 1040. In a case of a plurality of interface boards, a switching board (not shown in FIG. 10) is further included, and the switching board is configured to complete data exchange between the interface boards (the interface board is also referred to as a line card or a service board).

The main control board 1010 is configured to complete functions such as system management, device maintenance, and protocol processing. The interface board 1030 and the interface board 1040 are configured to provide various service interfaces (for example, a POS interface, a GE interface, and an ATM interface) and implement packet forwarding. The main control board 1010 mainly includes three types of functional units: a system management and control unit, a system clock unit, and a system maintenance unit. The main control board 1010, the interface board 1030, and the interface board 1040 are connected to a system backplane through a system bus to implement interworking. The interface board 1030 includes one or more processors 1031. The processor 1031 is configured to control and manage the interface board 1030 and communicate with a central processing unit 1012 on the main control board 1010. A memory 1032 on the interface board 1030 is configured to store forwarding information, a mapping relationship, and the like. The interface board 1030 includes one or more network interfaces 1033 configured to receive and send a packet. Specific implementation is not described herein again. As shown in FIG. 10, the main control board 1010 further includes a memory 1014. The memory 1014 is configured to store system management information, a protocol, and the like. This is not limited in this embodiment of this application.

As shown in FIG. 10, this embodiment includes a plurality of interface boards and uses a distributed forwarding mechanism. In this mechanism, an operation on the interface board 1040 is basically similar to an operation on the interface board 1030. For example, the interface board 1040 includes one or more network interfaces 1043 for receiving and sending the packet, includes a memory 1042 for storing the forwarding information, the mapping relationship, and the like, and includes a processor 1041 for controlling and managing the interface board 1040 and communicating with the central processing unit 1012 on the main control board 1010. For brevity, the interface board 1040 is not described herein again.

In FIG. 10, the processor 1031 in the interface board 1030 and/or the processor 1041 in the interface board 1040 may be dedicated hardware or a chip, for example, a network processor or an application-specific integrated circuit. This implementation is generally a manner in which a forwarding plane uses dedicated hardware or a chip for processing. In another implementation, the processor 1031 in the interface board 1030 and/or the processor 1041 in the interface board 1040 use a general-purpose processor, for example, a central processing unit (central processing unit, CPU).

In addition, it should be noted that there may be one or more main control boards, and when there are a plurality of main control boards, the main control boards may include an active main control board and a standby main control board. There may be one or more interface boards, and a network device having a stronger data processing capability provides more interface boards. In a case of a plurality of interface boards, the plurality of interface boards may communicate with each other through one or more switching boards, and load sharing and redundancy backup may be implemented by the plurality of interface boards together. In a centralized forwarding architecture, the network device may not need the switching board, and the interface board provides a function of processing service data of an entire system. In a distributed forwarding architecture, the network device includes a plurality of interface boards, data exchange between the plurality of interface boards may be implemented by using a switching board, and a large-capacity data exchange and processing capability is provided. Therefore, a data access and processing capability of a network device in a distributed architecture is greater than that of a network device in a centralized architecture. A specific architecture to be used depends on a networking deployment scenario, and is not limited herein.

In an optional implementation, the memory 1032 and/or the memory 1042 are/is a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile optical disc, a Blu-ray disc, or the like), a magnetic disk or another magnetic storage device, or any other medium capable of carrying or storing expected program code in a form of instructions or a data structure and capable of being accessed by a computer. This is not limited thereto. The memory 1032 may exist independently, and is connected to the processor 1031 through a communication bus, or may be integrated with the processor 1031. The memory 1042 may exist independently, and is connected to the processor 1041 through a communication bus, or may be integrated with the processor 1041.

The memory 1032 is configured to store program code, and the processor 1031 controls execution of the program code, to perform a part or all of the steps of the methods provided in the foregoing embodiments. The processor 1031 is configured to execute the program code stored in the memory 1032. The program code may include one or more software modules. The one or more software modules may be the functional modules provided in the embodiment shown in FIG. 7 or FIG. 8. The memory 1042 may also be configured to store program code, and the processor 1041 controls execution of the program code, to perform a part or all steps of the methods provided in the foregoing embodiments. Similarly, the memory 1014 may also be configured to store program code, and the central processing unit 1012 controls execution of the program code, to perform a part or all steps of the methods provided in the foregoing embodiments.

In an optional implementation, by using any apparatus such as a transceiver, the network interface 1033 and the network interface 1043 are configured to communicate with another device or a communication network. The communication network is, for example, an Ethernet, a radio access network (radio access network, RAN), or a wireless local area network (wireless local area network, WLAN).

FIG. 11 is a schematic diagram of still yet another packet mirroring apparatus 1100 according to an embodiment of this application. The packet mirroring apparatus 1100 may be a network device or a functional component in a network device, or may be a network management device or a functional component in a network management device. The packet mirroring apparatus 1100 includes a processor 1102, a memory 1104, a communication interface 1106, and a bus 1108. The processor 1102, the memory 1104, and the communication interface 1106 are communicatively connected through the bus 1108. In another embodiment, the processor 1102, the memory 1104, and the communication interface 1106 may also be connected in another manner.

The memory 1104 is configured to store a computer program 11042, and the computer program 11042 may include instructions and data. The memory 1104 may be various types of storage media, such as a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 1102 may be a general-purpose processor. The general-purpose processor is a processor that performs a specific step and/or operation by reading and executing a computer program (for example, the computer program 11042) stored in a memory (for example, the memory 1104). The general-purpose processor may use data stored in the memory in a process of performing the foregoing step and/or operation. The stored computer program may be executed to implement related functions of the foregoing processing module 720, processing module 820, generation module 910, and the like. The general-purpose processor may be a CPU. The processor 1102 may also be a dedicated processor. The dedicated processor is a processor specially designed to perform a specific step and/or operation. The dedicated processor may be a digital signal processor (digital signal processor, DSP), an ASIC, an FPGA, or the like. The processor 1102 may further be a multi-core processor. The processor 1102 includes at least one circuit, to perform all or a part of the steps of the method in the foregoing embodiment.

The communication interface 1106 includes an input/output (input/output, I/O) interface, a physical interface, a logical interface, and other interfaces that are configured to implement interconnection between components inside the packet mirroring apparatus 1100, and an interface that is configured to implement interconnection between the packet mirroring apparatus 1100 and another device (for example, the network device). The physical interface may be a gigabit Ethernet interface (gigabit Ethernet, GE), and may be configured to implement interconnection between the packet mirroring apparatus 1100 and another device. The logical interface is an internal interface of the packet mirroring apparatus 1100, and may be configured to implement component interconnection inside the packet mirroring apparatus 1100. It is easy to understand that the communication interface 1106 may be configured for communication between the packet mirroring apparatus 1100 and another device. For example, the communication interface 1106 is configured to send and receive a packet between the packet mirroring apparatus 1100 and the another device. The communication interface 1106 may implement related functions of the foregoing receiving module 710, receiving module 810, forwarding module 830, sending module 920, and the like.

The bus 1108 may be any type of communication bus configured to implement interconnection between the processor 1102, the memory 1104, and the communication interface 1106, for example, a system bus.

The foregoing components may be respectively disposed on chips independent of each other, or at least a part of or all of the components may be disposed on a same chip. Whether the components are independently disposed on different chips or are integrated on one or more chips usually depends on a requirement of a product design. Specific implementation forms of the foregoing components are not limited in this embodiment of this application.

The packet mirroring apparatus 1100 shown in FIG. 11 is merely used as an example, and the packet mirroring apparatus 1100 may further include another component. The packet mirroring apparatus 1100 performs packet mirroring by performing all or a part of steps of the methods provided in the foregoing embodiments.

An embodiment of this application provides a packet mirroring system. The packet mirroring system includes a first network device and a second network device. In an implementation, the first network device includes the packet mirroring apparatus 700 shown in FIG. 7, and the second network device includes the packet mirroring apparatus 800 shown in FIG. 8. In another implementation, at least one of the first network device and the second network device includes the packet mirroring apparatus 1000 shown in FIG. 10 or the packet mirroring apparatus 1100 shown in FIG. 11.

Optionally, the packet mirroring system further includes a network management device, and the network management device includes the packet mirroring apparatus 900 shown in FIG. 9 or the packet mirroring apparatus 1100 shown in FIG. 11.

For example, the packet mirroring system is the communication system shown in FIG. 1.

An embodiment of this application provides a computer-readable storage medium. The computer-readable storage medium stores a computer program. When the computer program is executed (for example, executed by a network device, a network management device, or one or more processors), all or a part of the steps of the methods provided in the foregoing method embodiments are implemented.

An embodiment of this application provides a computer program product. The computer program product includes a program or code. When the program or the code is executed (for example, executed by a network device, a network management device, or one or more processors), all or a part of the steps of the methods provided in the foregoing method embodiments are implemented.

An embodiment of this application provides a chip. The chip includes a programmable logic circuit and/or program instructions. When running, the chip is configured to implement all or a part of the steps of the methods provided in the foregoing method embodiments.

All or a part of the foregoing embodiments may be implemented by software, hardware, firmware, or any combination thereof. When embodiments are implemented by using the software, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or includes a data storage apparatus, such as a server or a data center, integrating one or more usable media. The usable medium may be a magnetic medium (for example, a floppy disk, a hard disk, or a magnetic tape), an optical medium, a semiconductor medium (for example, a solid state disk), or the like.

It should be understood that, in this application, the term "at least one" means one or more, and the term "a plurality of" means two or more. The term "and/or" in this application is merely an association relationship for describing associated objects, and represents that three relationships may exist. For example, A and/or B may represent the following three cases: Only A exists, both A and B exist, and only B exists. In addition, for ease of clear description, in this application, words such as "first", "second", and "third" are used to distinguish between same items or similar items whose functions and actions are basically the same. A person skilled in the art may understand that the words such as "first", "second", and "third" do not limit a quantity and an execution sequence.

Different types of embodiments such as the method embodiments and the apparatus embodiments provided in embodiments of this application may be cross-referenced. This is not limited in embodiments of this application. An order of operations in the method embodiments provided in embodiments of this application can be properly adjusted, and an operation can be added or deleted based on a situation. Any variation method that can be easily figured out by a person skilled in the art within the technical scope disclosed in this application shall fall within the protection scope of this application. Therefore, details are not described again.

In the corresponding embodiments provided in this application, it should be understood that the disclosed apparatus and the like may be implemented in other composition manners. For example, the apparatus embodiments described above are merely examples. For example, division of modules is merely division of logical functions and there may be other division manners in actual application. For example, a plurality of units or components may be combined or may be integrated to another system, or some features may be ignored or not executed.

The modules described as separate parts may or may not be physically separate, and the parts described as modules may or may not be physical modules, may be located in one position, or may be distributed on a plurality of devices. A part of or all of the modules may be selected according to the actual needs to achieve the objectives of the solutions of the embodiments.

The foregoing descriptions are merely example implementations of this application, but are not intended to limit the protection scope of this application. Any equivalent modification or replacement readily conceived by a person skilled in the art within the technical scope disclosed in this application shall fall within the protection scope of this application. Therefore, the protection scope of this application shall be subject to the protection scope of the claims.

## Claims

1. A packet mirroring method, wherein the method comprises:
receiving (S205), by a first network device, an internet protocol version 6, IPv6, packet, wherein the IPv6 packet comprises a service packet and a packet header, the packet header comprises a first mirroring index, and the first mirroring index corresponds to feature information in the service packet;
determining (S206), by the first network device, packet observing port information based on the first mirroring index and a first mapping relationship, wherein the packet observing port information indicates a packet observing port, and the first network device comprises the packet observing port; and
mirroring (S207), by the first network device, the IPv6 packet to the packet observing port.

2. The method according to claim 1, wherein the packet header comprises an IPv6 basic header and an IPv6 extension header, and the IPv6 extension header comprises the first mirroring index.

3. The method according to claim 2, wherein the IPv6 extension header comprises a segment routing header, SRH.

4. The method according to claim 2, wherein the IPv6 extension header comprises a bit index explicit replication, BIER, header.

5. The method according to claim 4, wherein the BIER header is a bit index explicit replication internet protocol version 6, BIERv6, header or a bit index explicit replication in internet protocol version 6, BIERin6, header.

6. The method according to any one of claims 1 to 5, wherein the method further comprises:
receiving, by the first network device, the first mapping relationship sent by a network management device.

7. The method according to any one of claims 1 to 6, wherein the feature information comprises at least one of the following: an n-tuple, a source media access control, MAC, address, and priority information, wherein n is a positive integer.

8. The method according to any one of claims 1 to 7, wherein the first network device is a transit device or an egress device on a first IPv6 forwarding path, and the first IPv6 forwarding path is a forwarding path of the IPv6 packet.

9. A packet mirroring method, wherein the method comprises:
receiving (S201), by a second network device, a service packet;
determining (S202), by the second network device, a first mirroring index based on a second mapping relationship and feature information in the service packet, wherein the second mapping relationship indicates that the first mirroring index corresponds to the feature information in the service packet;
obtaining (S203), by the second network device, an internet protocol version 6, IPv6, packet based on the service packet and the first mirroring index, wherein the IPv6 packet comprises the service packet and a packet header, and the packet header comprises the first mirroring index; and
forwarding (S204), by the second network device, the IPv6 packet.

10. The method according to claim 9, wherein the packet header comprises an IPv6 basic header and an IPv6 extension header, and the IPv6 extension header comprises the first mirroring index.

11. A packet mirroring method, wherein the method comprises:
generating (S601), by a network management device, a first mapping relationship and a second mapping relationship, wherein the first mapping relationship indicates that a first mirroring index corresponds to packet observing port information, the packet observing port information indicates a packet observing port in a first network device, and the second mapping relationship indicates that the first mirroring index corresponds to feature information in a service packet;
sending (S602), by the network management device, the first mapping relationship to the first network device; and
sending (S203), by the network management device, the second mapping relationship to a second network device.

12. A packet mirroring apparatus, used in a first network device and comprising a memory and a processor, wherein
the memory is configured to store a computer program; and
the processor is configured to execute the computer program stored in the memory, to enable the packet mirroring apparatus to perform the packet mirroring method according to any one of claims 1 to 8.

13. A packet mirroring apparatus, used in a second network device and comprising a memory and a processor, wherein
the memory is configured to store a computer program; and
the processor is configured to execute the computer program stored in the memory, to enable the packet mirroring apparatus to perform the packet mirroring method according to claim 9 or 10.

14. A packet mirroring apparatus, used in a network management device and comprising a memory and a processor, wherein
the memory is configured to store a computer program; and
the processor is configured to execute the computer program stored in the memory, to enable the packet mirroring apparatus to perform the packet mirroring method according to claim 11.

15. A packet mirroring system, comprising a first network device and a second network device, wherein
the first network device comprises the packet mirroring apparatus according to claim 12, and the second network device comprises the packet mirroring apparatus according to claim 13.
